(19) Europäisches Patentamt
European Patent Office
Office européen des brevets

(11) **EP 4 223 790 A1**

(12) **EUROPEAN PATENT APPLICATION**
published in accordance with Art. 153(4) EPC

(43) Date of publication:
**09.08.2023 Bulletin 2023/32**

(21) Application number: **21875826.6**

(22) Date of filing: **30.09.2021**

(51) International Patent Classification (IPC):
$C08F\ 8/00$ (2006.01)  $C08F\ 214/26$ (2006.01)
$C08F\ 216/14$ (2006.01)  $H01B\ 7/02$ (2006.01)

(52) Cooperative Patent Classification (CPC):
C08F 8/00; C08F 214/26; C08F 216/14;
C08F 216/20; H01B 3/44; H01B 7/02

(86) International application number:
**PCT/JP2021/036301**

(87) International publication number:
**WO 2022/071530 (07.04.2022 Gazette 2022/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2020 JP 2020166523**

(71) Applicant: **Daikin Industries, Ltd.
Osaka-shi, Osaka 530-0001 (JP)**

(72) Inventors:
• **ISAKA, Tadaharu
  Osaka-shi, Osaka 530-0001 (JP)**

• **ZENKE, Yumi
  Osaka-shi, Osaka 530-0001 (JP)**
• **YAMAMOTO, Yukari
  Osaka-shi, Osaka 530-0001 (JP)**
• **TSUDA, Hayato
  Osaka-shi, Osaka 530-0001 (JP)**
• **AOYAMA, Takahisa
  Osaka-shi, Osaka 530-0001 (JP)**

(74) Representative: **Hoffmann Eitle
Patent- und Rechtsanwälte PartmbB
Arabellastraße 30
81925 München (DE)**

(54) **COPOLYMER, INJECTION MOLDED ARTICLE, AND MEMBER TO BE COMPRESSED**

(57) There is provided a copolymer containing tetrafluoroethylene unit and a fluoro(alkyl vinyl ether) unit, and having a content of the fluoro(alkyl vinyl ether) unit of 2.0 to 2.8% by mass with respect to the whole of the monomer units, a melt flow rate at 372°C of 5 to 23 g/10 min, and the number of functional groups of 50 or less per $10^6$ main-chain carbon atoms.

EP 4 223 790 A1

**Description**

TECHNICAL FIELD

The present disclosure relates to a copolymer, an injection molded article and a member to be compressed.

BACKGROUND ART

A known fluororesin having excellent mechanical property, chemical property, electric property, etc., and also being melt-fabricable includes a tetrafluoroethylene/perfluoroalkyl vinyl ether copolymer (PFA).

For example, in Patent Document 1, a sealing material is described which is composed of a fluorine-containing polymer having a polymerization unit based on tetrafluoroethylene and a polymerization unit based on one or more perfluoro(alkyl vinyl ether)s, wherein the fluorine-containing polymer has a content of the polymerization unit based on perfluoro(alkyl vinyl ether)s of 4.0% by mass or lower with respect to the whole of the polymerization units, and has a melt flow rate of 0.1 to 100 g/10 min.

RELATED ART

PATENT DOCUMENT

Patent Document 1: Japanese Patent Laid-Open No. 2013-177574

SUMMARY OF THE INVENTION

PROBLEM TO BE SOLVED BY THE INVENTION

An object of present disclosure is to provide a copolymer which has a high glass transition temperature, can easily be molded by an injection molding method, hardly corrodes metal molds to be used for molding, and is excellent in the electric property, and further, the copolymer which can give formed articles very excellent in the water vapor low permeability, excellent in the electrolytic solution low permeability, hardly making an electrolytic solution to leak out, excellent in the crack resistance to compression stresses, the heat distortion resistance and the abrasion resistance, very excellent in the sealability at high temperatures, and hardly making fluorine ions to dissolve out in an electrolytic solution.

MEANS FOR SOLVING THE PROBLEM

According to the present disclosure, there is provided a copolymer containing tetrafluoroethylene unit and a perfluoro(propyl vinyl ether) unit, wherein the copolymer has a content of the perfluoro(propyl vinyl ether) unit of 2.0 to 2.8% by mass with respect to the whole of the monomer units, a melt flow rate at 372°C of 5 to 23 g/10 min, and the number of functional groups of 50 or less per $10^6$ main-chain carbon atoms.

According to the present disclosure, an injection molded article comprising the above copolymer is further provided.

According to the present disclosure, a member to be compressed comprising the above copolymer is further provided.

According to the present disclosure, an extrusion formed article comprising the above copolymer is further provided.

According to the present disclosure, a coated electric wire having a coating layer comprising the above copolymer is further provided.

According to the present disclosure, a film comprising the above copolymer is further provided.

EFFECTS OF INVENTION

According to the present disclosure, there can be provided a copolymer which has a high glass transition temperature, can easily be molded by an injection molding method, hardly corrodes metal molds to be used for molding, and is excellent in the electric property, and further can give formed articles very excellent in the water vapor low permeability, excellent in the electrolytic solution low permeability, hardly making an electrolytic solution to leak out, excellent in the crack resistance to compression stresses, the heat distortion resistance and the abrasion resistance, very excellent in the sealability at high temperatures, and hardly making fluorine ions to dissolve out in an electrolytic solution.

BRIEF DESCRIPTION OF DRAWING

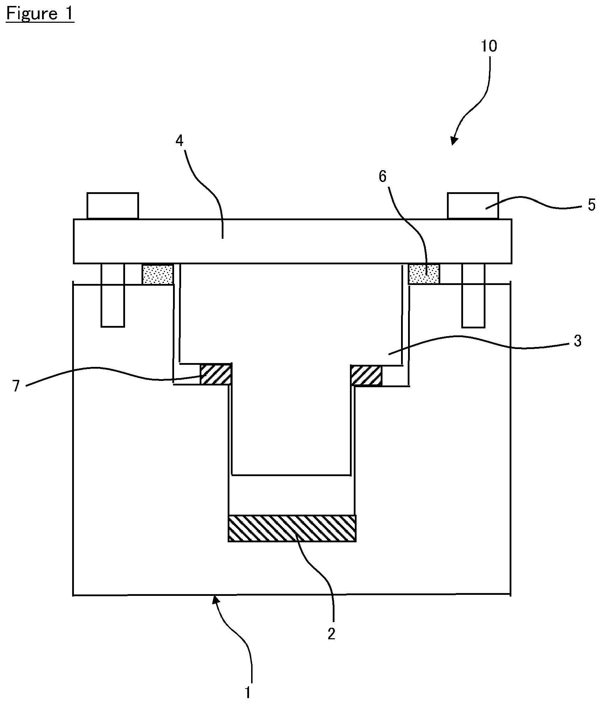

Figure 1 is a schematic cross-sectional diagram of a test jig to be used for an electrolytic solution leak test.

DESCRIPTION OF EMBODIMENTS

Hereinafter, specific embodiments of the present disclosure will be described in detail, but the present disclosure is not limited to the following embodiments.

A copolymer of the present disclosure contains tetrafluoroethylene (TFE) unit and a perfluoro(propyl vinyl ether) (PPVE) unit.

Patent Document 1 describes that a vehicular secondary battery is sometimes exposed to a high temperature of 85°C or higher in the use environment, and in order to keep the airtightness and the liquid tightness of the battery interior, it is important that a sealing material exhibits a sufficient compression recovering property even under such a severe use condition, and can maintain high adhesion between a battery can and a sealing body.

However, a copolymer which can exhibit excellent sealability also in a higher-temperature environment is demanded. A copolymer which can exhibit excellent sealability, in particular, even in a temperature exceeding the glass transition temperature of the copolymer, is demanded.

It has been found that by suitably regulating the content of the PPVE unit, the melt flow rate (MFR) and the number of functional groups of the copolymer containing the TFE unit and the PPVE unit, the glass transition temperature of the copolymer sufficiently rises and the excellent heat resistance thereof is exhibited. Then, it has been also found that such a copolymer can easily be molded by injection molding, hardly corrodes metal molds to be used for molding, and is excellent in the electric property. Further, it has been also found that formed articles having such a copolymer are very excellent in the water vapor low permeability and excellent in the electrolytic solution low permeability, hardly make an electrolytic solution to leak out, are excellent in the crack resistance to compression stresses, the heat distortion resistance and the abrasion resistance, are very excellent in the sealability at high temperatures, and hardly make fluorine ions to dissolve out in an electrolytic solution.

The copolymer of the present disclosure is a melt-fabricable fluororesin. Being melt-fabricable means that a polymer can be melted and processed by using a conventional processing device such as an extruder or an injection molding machine.

The content of the PPVE unit of the copolymer is, with respect to the whole of the monomer units, 2.0 to 2.8% by mass. The content of the PPVE unit of the copolymer is preferably 2.1% by mass or higher, more preferably 2.2% by mass or higher, still more preferably 2.3% by mass or higher and especially preferably 2.4% by mass or higher, and preferably 2.7% by mass or lower. Due to that the content of the PPVE unit of the copolymer is in the above range, the copolymer higher in the glass transition temperature can be obtained, and the copolymer giving formed articles very excellent in the water vapor low permeability and excellent in the electrolytic solution low permeability, hardly making an electrolytic solution to leak out, excellent in the crack resistance to compression stresses, the heat distortion resistance and the abrasion resistance, and very excellent in the sealability at high temperatures can be obtained.

The content of the TFE unit of the copolymer is, with respect to the whole of the monomer units, preferably 97.2 to 98.0% by mass, more preferably 97.8% by mass or lower, still more preferably 97.7% by mass or lower, further still more preferably 97.7% by mass or lower and especially preferably 97.6% by mass or lower, and preferably 97.3% by mass or higher. Due to that the content of the TFE unit of the copolymer is in the above range, the copolymer higher in the glass transition temperature can be obtained, and the copolymer giving formed articles very excellent in the water vapor low permeability and excellent in the electrolytic solution low permeability, hardly making an electrolytic solution to leak out, excellent in the crack resistance to compression stresses, the heat distortion resistance and the abrasion resistance, and very excellent in the sealability at high temperatures can be obtained.

In the present disclosure, the content of each monomer unit in the copolymer is measured by a $^{19}$F-NMR method.

The copolymer can also contain a monomer unit originated from a monomer copolymerizable with TFE and PPVE. In this case, the content of the monomer unit copolymerizable with TFE and PPVE is, with respect to the whole of monomer units of the copolymer, preferably 0 to 4.0% by mass, more preferably 0.05 to 0.80% by mass and still more preferably 0.1 to 0.5% by mass.

The monomers copolymerizable with TFE and PPVE may include hexafluoropropylene (HFP), vinyl monomers represented by $CZ^1Z^2=CZ^3(CF_2)_nZ^4$ wherein $Z^1$, $Z^2$ and $Z^3$ are identical or different, and represent H or F; $Z^4$ represents H, F or Cl; and n represents an integer of 2 to 10, and alkyl perfluorovinyl ether derivatives represented by $CF_2=CF$-$OCH_2$-$Rf^1$ wherein $Rf^1$ represents a perfluoroalkyl group having 1 to 5 carbon atoms. Among these, HFP is preferred.

The copolymer is preferably at least one selected from the group consisting of a copolymer consisting only of the TFE unit and the PPVE unit, and TFE/HFP/PPVE copolymer, and is more preferably a copolymer consisting only of the TFE unit and the PPVE unit.

The melt flow rate (MFR) of the copolymer is 5 to 23 g/10 min. The MFR of the copolymer is preferably 6 g/10 min or higher, more preferably 7 g/10 min or higher and still more preferably 8 g/10 min or higher, and preferably 21 g/10 min or lower, more preferably 20 g/10 min or lower, still more preferably 19 g/10 min or lower, especially preferably 18 g/10 min or lower and most preferably 16 g/10 min or lower. Due to that the MFR of the copolymer is in the above range, the copolymer which can easily be molded by injection molding and give formed articles very excellent in the water vapor low permeability and excellent in the electrolytic solution low permeability, hardly making an electrolytic solution to leak out, excellent in the abrasion resistance and the heat distortion resistance, and very excellent in the sealability at high temperatures can be obtained.

In the present disclosure, the MFR is a value obtained as a mass (g/10 min) of the polymer flowing out from a nozzle of 2.1 mm in inner diameter and 8 mm in length per 10 min at 372°C under a load of 5 kg using a melt indexer, according to ASTM D1238.

The MFR can be regulated by regulating the kind and amount of a polymerization initiator to be used in polymerization of monomers, the kind and amount of a chain transfer agent, and the like.

In the present disclosure, the number of functional groups per $10^6$ main-chain carbon atoms of the copolymer is 50 or less. The number of functional groups per $10^6$ main-chain carbon atoms of the copolymer is preferably 40 or less, more preferably 30 or less, still more preferably 20 or less, further still more preferably 15 or less, especially preferably 10 or less and most preferably 6 or less. Due to that the number of functional groups of the copolymer is in the above range, it can be made more difficult for metal molds in molding using the metal molds to be corroded and the electric property of the copolymer can be more improved. The copolymer giving formed articles better in the electrolytic solution low permeability, more hardly making an electrolytic solution to leak out, and more hardly making fluorine ions to dissolve out in an electrolytic solution can also be obtained. Further, due to that the number of functional groups of the copolymer is in the above range, decomposition of the functional groups of the copolymer and generation of gases, which causes forming defects such as foaming, can be suppressed.

For identification of the kind of the functional groups and measurement of the number of the functional groups, infrared spectroscopy can be used.

The number of the functional groups is measured, specifically, by the following method. First, the copolymer is molded by cold press to prepare a film of 0.25 to 0.30 mm in thickness. The film is analyzed by Fourier transform infrared spectroscopy to obtain an infrared absorption spectrum, and a difference spectrum against a base spectrum that is completely fluorinated and has no functional groups is obtained. From an absorption peak of a specific functional group observed on this difference spectrum, the number N of the functional group per $1 \times 10^6$ carbon atoms in the copolymer is calculated according to the following formula (A).

$$N = I \times K/t \quad \cdots \quad (A)$$

I: absorbance
K: correction factor
t: thickness of film (mm)

For reference, for some functional groups, the absorption frequency, the molar absorption coefficient and the correction factor are shown in Table 1. Then, the molar absorption coefficients are those determined from FT-IR measurement data of low molecular model compounds.

[Table 1]

**Table 1**

| Functional Group | Absorption Frequency ($cm^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |

(continued)

| Functional Group | Absorption Frequency (cm$^{-1}$) | Molar Extinction Coefficient (l/cm/mol) | Correction Factor | Model Compound |
|---|---|---|---|---|
| $-CONH_2$ | 3436 | 506 | 460 | $C_7H_{15}CONH_2$ |
| $-CH_2OH_2$, $-OH$ | 3648 | 104 | 2236 | $C_7H_{15}CH_2OH$ |
| $-CF_2H$ | 3020 | 8.8 | 26485 | $H(CF_2CF_2)_3CH_2OH$ |
| $-CF=CF_2$ | 1795 | 635 | 366 | $CF_2=CF_2$ |

Absorption frequencies of $-CH_2CF_2H$, $-CH_2COF$, $-CH_2COOH$,$-CH_2COOCH_3$ and $-CH_2CONH_2$ are lower by a few tens of kaysers (cm$^{-1}$) than those of $-CF_2H$, $-COF$, $-COOH$ free and $-COOH$ bonded, $-COOCH_3$ and $-CONH_2$ shown in the Table, respectively.

For example, the number of the functional group $-COF$ is the total of the number of a functional group determined from an absorption peak having an absorption frequency of 1,883 cm$^{-1}$ derived from $-CF_2COF$ and the number of a functional group determined from an absorption peak having an absorption frequency of 1,840 cm$^{-1}$ derived from $-CH_2COF$.

The functional groups are ones present on main chain terminals or side chain terminals of the copolymer, and ones present in the main chain or the side chains. The number of the functional groups may be the total of numbers of $-CF=CF_2$, $-CF_2H$,$-COF$, $-COOH$, $-COOCH_3$, $-CONH_2$ and $-CH_2OH$.

The functional groups are introduced to the copolymer by, for example, a chain transfer agent or a polymerization initiator used for production of the copolymer. For example, in the case of using an alcohol as the chain transfer agent, or a peroxide having a structure of $-CH_2OH$ as the polymerization initiator, $- CH_2OH$ is introduced on the main chain terminals of the copolymer. Alternatively, the functional group is introduced on the side chain terminal of the copolymer by polymerizing a monomer having the functional group.

The copolymer satisfying the above range regarding the number of functional groups can be obtained by subjecting the copolymer to a fluorination treatment. That is, the copolymer of the present disclosure is preferably one which is subjected to the fluorination treatment. Further, the copolymer of the present disclosure preferably has $-CF_3$ terminal groups.

The melting point of the copolymer is preferably 305 to 317°C and more preferably 305 to 315°C. Due to that the melting point is in the above range, there can be obtained the copolymer giving formed articles better in the sealability particularly at high temperatures.

In the present disclosure, the melting point can be measured by using a differential scanning calorimeter [DSC].

The glass transition temperature (Tg) of the copolymer is preferably 95°C or higher, more preferably 98°C or higher and still more preferably 99°C or higher, and preferably 110°C or lower, more preferably 105°C or lower and still more preferably 103°C or lower. Due to that the copolymer of the present disclosure can have such a high glass transition temperature, there can be obtained the copolymer giving formed articles exhibiting excellent heat resistance and being better in the sealability particularly at high temperatures.

In the present disclosure, the glass transition temperature can be measured by a dynamic viscoelasticity measurement.

The water vapor permeability of the copolymer is preferably 8.5 g·cm/m$^2$ or lower, more preferably 8.0 g·cm/m$^2$ or lower, still more preferably 7.9 g·cm/m$^2$ or lower and further still more preferably 7.6 g·cm/m$^2$ or lower. Due to that the content of the PPVE unit, the melt flow rate (MFR) and the number of functional groups of the copolymer containing the TFE unit and the PPVE unit are suitably regulated, the copolymer has remarkably excellent water vapor low permeability. Hence, by using a formed article containing the copolymer of the present disclosure, for example, as a member to be compressed of a secondary battery, the permeation of moisture can effectively be prevented even under a high-temperature high-humidity condition.

In the present disclosure, the water vapor permeability can be measured under the condition of a temperature of 95°C and for 30 days. Specific measurement of the water vapor permeability can be carried out by a method described in Examples.

The electrolytic solution permeability of the copolymer is preferably 7.5 g·cm/m$^2$ or lower, more preferably 7.3 g·cm/m$^2$ or lower and still more preferably 7.1 g·cm/m$^2$ or lower. Due to that the content of the PPVE unit, the melt flow rate (MFR) and the number of functional groups of the copolymer containing the TFE unit and the PPVE unit are suitably regulated, the copolymer has a remarkably excellent electrolytic solution low permeability. Hence, by using a formed article containing the copolymer of the present disclosure, for example, as a member to be compressed of a secondary battery, the permeation of an electrolytic solution accommodated in a secondary battery can effectively be prevented.

In the present disclosure, specific measurement of the electrolytic solution permeability can be carried out by a method described in Examples.

In the copolymer of the present disclosure, the amount of fluorine ions dissolving out therefrom detected by an electrolytic solution immersion test is, in terms of mass, preferably 1.0 ppm or lower, more preferably 0.8 ppm or lower and still more preferably 0.7 ppm or lower. Due to that the amount of fluorine ions dissolving out is in the above range, the generation of gasses such as HF in a non-aqueous electrolyte battery can be more suppressed, and the deterioration and the shortening of the service life of the battery performance of a non-aqueous electrolyte battery can be more suppressed.

In the present disclosure, the electrolytic solution immersion test can be carried out by preparing a test piece of the copolymer having a weight corresponding to that of 10 sheets of formed articles (15 mm $\times$ 15 mm $\times$ 0.2 mm) of the copolymer, and putting, in a thermostatic chamber of 80°C, a glass-made sample bottle in which the test piece and 2 g of dimethyl carbonate (DMC) and allowing the resultant to stand for 144 hours.

The copolymer of the present disclosure can give formed articles being remarkably excellent in the sealability at high temperatures. The sealability at high temperatures can be evaluated by measuring the storage elastic modulus (E') at 150°C, the amount of recovery at 150°C and the surface pressure at 150°C. The copolymer high in the storage elastic modulus (E') at 150°C and large in the amount of recovery at 150°C enables a sufficient rebound resilience to keep on being exhibited also at high temperatures for a long term. Further, the copolymer high in the surface pressure at 150°C can give formed articles excellent in the sealability at high temperatures. The copolymer of the present disclosure can give formed articles excellent in the sealability at high temperatures exceeding the glass transition temperature of the copolymer.

The storage elastic modulus (E') at 150°C of the copolymer is preferably 140 MPa or higher, more preferably 145 MPa or higher and still more preferably 148 MPa or higher, and preferably 1,000 MPa or lower, more preferably 500 MPa or lower and still more preferably 300 MPa or lower. Due to that the storage elastic modulus (E') at 150°C of the copolymer is in the above range, the copolymer giving formed articles capable of continuously exhibiting a sufficient rebound resilience also at high temperatures for a long term, and better in the sealability at high temperatures can be obtained.

The storage elastic modulus (E') can be measured by carrying out a dynamic viscoelasticity measurement under the condition of a temperature-increasing rate of 2°C/min and a frequency of 10 Hz and in the range of 30 to 250°C. The storage elastic modulus (E') at 150°C can be raised by regulating the content of the PPVE unit and the melt flow rate (MFR) of the copolymer.

The surface pressure at 150°C of the copolymer is preferably 1.60 MPa or higher, more preferably 1.65 MPa or higher and still more preferably 1.70 MPa or higher; the upper limit is not limited, but may be 3.00 MPa or lower. The surface pressure at 150°C of the copolymer can be raised by regulating the content of the PPVE unit, the melt flow rate (MFR) and the number of functional groups of the copolymer.

The surface pressure can be determined as follows. A test piece obtained from the copolymer is deformed at a compression deformation rate of 50%, allowed to stand as is at 150°C for 18 hours, released from the compressive state and allowed to stand at room temperature for 30 min, and thereafter, the height of the test piece (height of the test piece after being compressively deformed) is measured; and the surface pressure can be calculated by the following formula using the height of the test piece after being compressively deformed, and the storage elastic modulus (MPa) at 150°C.

$$\text{surface pressure at } 150°C \text{ (MPa)} = (t_2 - t_1)/t_1 \times E'$$

$t_1$: an original height (mm) of a test piece before being compressively deformed $\times$ 50%
$t_2$: a height (mm) of the test piece after being compressively deformed
E': a storage elastic modulus (MPa) at 150°C

The amount of recovery at 150°C of the copolymer can be measured by the same method as in the measurement of the surface pressure. The amount of recovery at 150°C of a formed article is, in the case where a test piece is deformed at a compression deformation rate of 50%, a difference $(t_2-t_1)$ between a height $(t_2)$ of the test piece after being compression deformed and an original height $(t_1)$ of the test piece before being compression deformed. The amount of recovery at 150°C of a formed article can be made large by regulating the content of the PPVE unit, the melt flow rate (MFR) and the number of functional groups of the copolymer.

The dielectric loss tangent at 6 GHz of the copolymer of the present disclosure is preferably $6.0\times10^{-4}$ or lower, more preferably $5.0\times10^{-4}$ or lower and still more preferably $4.0\times10^{-4}$ or lower. In recent years, along with the increase in the amount of information to be transmitted, radio waves in high frequency regions are likely to be increasingly used. For example, for high frequency wireless LAN, satellite communication, cell phone base stations and the like, microwaves of 3 to 30 GHz are used. As materials to be used for communication devices using such high frequencies, materials having a low dielectric loss tangent (tanδ) are demanded. When the dielectric loss tangent of the copolymer of the present disclosure is in the above range, since the attenuation factor of high frequency signals largely decreases, the case is preferable.

In the present disclosure, the dielectric loss tangent is a value obtained by using a network analyzer, manufactured by Agilent Technologies Inc., and a cavity resonator, and measuring the changes in the resonance frequency and the electric field strength in the temperature range of 20 to 25°C.

The copolymer of the present disclosure can be produced by a polymerization method such as suspension polymerization, solution polymerization, emulsion polymerization or bulk polymerization. The polymerization method is preferably emulsion polymerization or suspension polymerization. In these polymerization methods, conditions such as temperature and pressure, and a polymerization initiator and other additives can suitably be set depending on the formulation and the amount of the copolymer.

As the polymerization initiator, an oil-soluble radical polymerization initiator, or a water-soluble radical polymerization initiator may be used.

The oil-soluble radical polymerization initiator may be a known oil-soluble peroxide, and examples thereof typically include:

dialkyl peroxycarbonates such as di-n-propyl peroxydicarbonate, diisopropyl peroxydicarbonate, di-sec-butyl peroxydicarbonate and di-2-ethoxyethyl peroxydicarbonate;
peroxyesters such as t-butyl peroxyisobutyrate and t-butyl peroxypivalate;
dialkyl peroxides such as di-t-butyl peroxide; and
di[fluoro(or fluorochloro)acyl] peroxides.

The di[fluoro(or fluorochloro)acyl] peroxides include diacyl peroxides represented by $[(RfCOO)-]_2$ wherein Rf is a perfluoroalkyl group, an ω-hydroperfluoroalkyl group or a fluorochloroalkyl group.

Examples of the di[fluoro(or fluorochloro)acyl] peroxides include di(ω-hydro-dodecafluorohexanoyl) peroxide, di(ω-hydro-tetradecafluoroheptanoyl) peroxide, di(ω-hydro-hexadecafluorononanoyl) peroxide, di(perfluoropropionyl) peroxide, di(perfluorobutyryl) peroxide, di(perfluorovaleryl) peroxide, di(perfluorohexanoyl) peroxide, di(perfluoroheptanoyl) peroxide, di(perfluorooctanoyl) peroxide, di(perfluorononanoyl) peroxide, di(ω-chloro-hexafluorobutyryl) peroxide, di(ω-chloro-decafluorohexanoyl) peroxide, di(ω-chloro-tetradecafluorooctanoyl) peroxide, ω-hydrodo-decafluoroheptanoyl-ω-hydrohexadecafluorononanoyl peroxide, ω-chloro-hexafluorobutyryl-ω-chloro-decafluorohexanoyl peroxide, ω-hydrododecafluoroheptanoyl-perfluorobutyryl peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide and di(undecachlorotriacontafluorodocosanoyl) peroxide.

The water-soluble radical polymerization initiator may be a known water-soluble peroxide, and examples thereof include ammonium salts, potassium salts and sodium salts of persulfuric acid, perboric acid, perchloric acid, perphosphoric acid, percarbonic acid and the like, organic peroxides such as disuccinoyl peroxide and diglutaroyl peroxide, and t-butyl permaleate and t-butyl hydroperoxide. A reductant such as a sulfite salt may be combined with a peroxide and used, and the amount thereof to be used may be 0.1 to 20 times with respect to the peroxide.

In the polymerization, a surfactant, a chain transfer agent and a solvent may be used, which are conventionally known.

The surfactant may be a known surfactant, for example, nonionic surfactants, anionic surfactants and cationic surfactants may be used. Among these, fluorine-containing anionic surfactants are preferred, and more preferred are linear or branched fluorine-containing anionic surfactants having 4 to 20 carbon atoms, which may contain an ether bond oxygen (that is, an oxygen atom may be inserted between carbon atoms). The amount of the surfactant to be added (with respect to water in the polymerization) is preferably 50 to 5,000 ppm.

Examples of the chain transfer agent include hydrocarbons such as ethane, isopentane, n-hexane and cyclohexane; aromatics such as toluene and xylene; ketones such as acetone; acetate esters such as ethyl acetate and butyl acetate; alcohols such as methanol and ethanol; mercaptans such as methylmercaptan; and halogenated hydrocarbons such as carbon tetrachloride, chloroform, methylene chloride and methyl chloride. The amount of the chain transfer agent to be added may vary depending on the chain transfer constant value of the compound to be used, but is usually in the range of 0.01 to 20% by mass with respect to the solvent in the polymerization.

The solvent may include water and mixed solvents of water and an alcohol.

In the suspension polymerization, in addition to water, a fluorosolvent may be used. The fluorosolvent may include hydrochlorofluoroalkanes such as $CH_3CClF_2$, $CH_3CCl_2F$, $CF_3CF_2CCl_2H$ and $CF_2ClCF_2CFHCl$; chlorofluoroalkanes such as $CF_2ClCFClCF_2CF_3$ and $CF_3CFClCFClCF_3$; hydrofluroalkanes such as $CF_3CFHCFHCF_2CF_2CF_3$, $CF_2HCF_2CF_2CF_2H$ and $CF_3CF_2CF_2CF_2CF_2CF_2H$; hydrofluoroethers such as $CH_3OC_2F_5$, $CH_3OC_3F_5CF_3CF_2CH_2OCHF_2$, $CF_3CHFCF_2OCH_3$, $CHF_2CF_2OCH_2F$, $(CF_3)_2CHCF_2OCH_3$, $CF_3CF_2CH_2OCH_2CHF_2$ and $CF_3CHFCF_2OCH_2CF_3$; and perfluoroalkanes such as perfluorocyclobutane, $CF_3CF_2CF_2CF_3$, $CF_3CF_2CF_2CF_2CF_3$ and

$CF_3CF_2CF_2CF_2CF_2CF_3$, and among these, perfluoroalkanes are preferred. The amount of the fluorosolvent to be used is, from the viewpoint of the suspensibility and the economic efficiency, preferably 10 to 100% by mass with respect to an aqueous medium.

The polymerization temperature is not limited, and may be 0 to 100°C. The polymerization pressure is suitably set depending on other polymerization conditions to be used such as the kind, the amount and the vapor pressure of the solvent, and the polymerization temperature, but may usually be 0 to 9.8 MPaG.

In the case of obtaining an aqueous dispersion containing the copolymer by the polymerization reaction, the copolymer can be recovered by coagulating, cleaning and drying the copolymer contained in the aqueous dispersion. Then in the case of obtaining the copolymer as a slurry by the polymerization reaction, the copolymer can be recovered by taking out the slurry from a reaction container, and cleaning and drying the slurry. The copolymer can be recovered in a shape of powder by the drying.

The copolymer obtained by the polymerization may be formed into pellets. A method of forming into pellets is not limited, and a conventionally known method can be used. Examples thereof include methods of melt extruding the copolymer by using a single-screw extruder, a twin-screw extruder or a tandem extruder and cutting the resultant into a predetermined length to form the copolymer into pellets. The extrusion temperature in the melt extrusion needs to be varied depending on the melt viscosity and the production method of the copolymer, and is preferably the melting point of the copolymer + 20°C to the melting point of the copolymer + 140°C. A method of cutting the copolymer is not limited, and there can be adopted a conventionally known method such as a strand cut method, a hot cut method, an underwater cut method, or a sheet cut method. Volatile components in the obtained pellets may be removed by heating the pellets (degassing treatment). Alternatively, the obtained pellets may be treated by bringing the pellets into contact with hot water of 30 to 200°C, steam of 100 to 200°C or hot air of 40 to 200°C.

Alternatively, the copolymer obtained by the polymerization may be subjected to fluorination treatment. The fluorination treatment can be carried out by bringing the copolymer having been subjected to no fluorination treatment into contact with a fluorine-containing compound. By the fluorination treatment, thermally unstable functional groups of the copolymer, such as -COOH, -COOCH$_3$, -CH$_2$OH, -COF, -CF=CF$_2$ and -CONH$_2$, and thermally relatively stable functional groups thereof, such as -CF$_2$H, can be converted to thermally very stable -CF$_3$. Consequently, the total number (number of functional groups) of -COOH, -COOCH$_3$, -CH$_2$OH, -COF, -CF=CF$_2$, -CONH$_2$ and -CF$_2$H of the copolymer can easily be controlled in the above-mentioned range.

The fluorine-containing compound is not limited, but includes fluorine radical sources generating fluorine radicals under the fluorination treatment condition. The fluorine radical sources include F$_2$ gas, CoF$_3$, AgF$_2$, UF$_6$, OF$_2$, N$_2$F$_2$, CF$_3$OF, halogen fluorides (for example, IF$_5$ and ClF$_3$).

The fluorine radical source such as F$_2$ gas may be, for example, one having a concentration of 100%, but from the viewpoint of safety, the fluorine radical source is preferably mixed with an inert gas and diluted therewith to 5 to 50% by mass, and then used; and it is more preferably to be diluted to 15 to 30% by mass. The inert gas includes nitrogen gas, helium gas and argon gas, but from the viewpoint of the economic efficiency, nitrogen gas is preferred.

The condition of the fluorination treatment is not limited, and the copolymer in a melted state may be brought into contact with the fluorine-containing compound, but the fluorination treatment can be carried out usually at a temperature of not higher than the melting point of the copolymer, preferably at 20 to 240°C and more preferably at 100 to 220°C. The fluorination treatment is carried out usually for 1 to 30 hours and preferably 5 to 25 hours. The fluorination treatment is preferred which brings the copolymer having been subjected to no fluorination treatment into contact with fluorine gas (F$_2$ gas).

A composition may be obtained by mixing the copolymer of the present disclosure and as required, other components. The other components include fillers, plasticizers, processing aids, mold release agents, pigments, flame retarders, lubricants, light stabilizers, weathering stabilizers, electrically conductive agents, antistatic agents, ultraviolet absorbents, antioxidants, foaming agents, perfumes, oils, softening agents and dehydrofluorination agents.

Examples of the fillers include silica, kaolin, clay, organo clay, talc, mica, alumina, calcium carbonate, calcium terephthalate, titanium oxide, calcium phosphate, calcium fluoride, lithium fluoride, crosslinked polystyrene, potassium titanate, carbon, boron nitride, carbon nanotube and glass fiber. The electrically conductive agents include carbon black. The plasticizers include dioctyl phthalate and pentaerythritol. The processing aids include carnauba wax, sulfone compounds, low molecular weight polyethylene and fluorine-based auxiliary agents. The dehydrofluorination agents include organic oniums and amidines.

As the above-mentioned other components, other polymers other than the copolymer may be used. The other polymers include fluororesins other than the copolymer, fluoroelastomer, and non-fluorinated polymers.

A method of producing the composition includes a method of dry mixing the copolymer and the other components, and a method of previously mixing the copolymer and the other components by a mixer and then melt kneading the mixture by a kneader, melt extruder or the like.

The copolymer of the present disclosure or the above-mentioned composition can be used as a processing aid, a forming material and the like, but use as a forming material is suitable. There can also be utilized aqueous dispersions, solutions and suspensions of the copolymer of the present disclosure, and the copolymer/solvent-based materials; and these can be used for application of coating materials, encapsulation, impregnation, and casting of films. However, since the copolymer of the present disclosure has the above-mentioned properties, it is preferable to use the copolymer as the forming material.

Formed articles may be obtained by forming the copolymer of the present disclosure or the above composition.

A method of forming the copolymer or the composition is not limited, and includes injection molding, extrusion forming, compression molding, blow molding, transfer molding, rotomolding and rotolining molding. As the forming method, among these, preferable are extrusion forming, compression molding, injection molding and transfer molding; from the viewpoint of being able to produce forming articles in a high productivity, more preferable are injection molding, extrusion forming and transfer molding, and still more preferable is injection molding. That is, it is preferable that formed articles are extrusion formed articles, compression molded articles, injection molded articles or transfer molded articles; and from the viewpoint of being able to produce molded articles in a high productivity, being injection molded articles, extrusion formed articles or transfer molded articles is more preferable, and being injection molded articles is still more preferable.

The shapes of the formed articles are not limited, and may be shapes of, for example, hoses, pipes, tubes, electric wire coatings, sheets, seals, gaskets, packings, films, tanks, rollers, bottles and containers.

The copolymer of the present disclosure, the above composition and the above formed articles can be used, for example, in the following applications.

Food packaging films, and members for liquid transfer for food production apparatuses, such as lining materials of fluid transfer lines, packings, sealing materials and sheets, used in food production processes;

chemical stoppers and packaging films for chemicals, and members for chemical solution transfer, such as lining materials of liquid transfer lines, packings, sealing materials and sheets, used in chemical production processes;

inner surface lining materials of chemical solution tanks and piping of chemical plants and semiconductor factories;

members for fuel transfer, such as O (square) rings, tubes, packings, valve stem materials, hoses and sealing materials, used in fuel systems and peripheral equipment of automobiles, and such as hoses and sealing materials, used in ATs of automobiles;

members used in engines and peripheral equipment of automobiles, such as flange gaskets of carburetors, shaft seals, valve stem seals, sealing materials and hoses, and other vehicular members such as brake hoses, hoses for air conditioners, hoses for radiators, and electric wire coating materials;

members for chemical transfer for semiconductor production apparatuses, such as O (square) rings, tubes, packings, valve stem materials, hoses, sealing materials, rolls, gaskets, diaphragms and joints;

members for coating and inks, such as coating rolls, hoses and tubes, for coating facilities, and containers for inks;

members for food and beverage transfer, such as tubes, hoses, belts, packings and joints for food and beverage, food packaging materials, and members for glass cooking appliances;

members for waste liquid transport, such as tubes and hoses for waste transport;

members for high-temperature liquid transport, such as tubes and hoses for high-temperature liquid transport;

members for steam piping, such as tubes and hoses for steam piping;

corrosionproof tapes for piping, such as tapes wound on piping of decks and the like of ships;

various coating materials, such as electric wire coating materials, optical fiber coating materials, and transparent front side coating materials installed on the light incident side and back side lining materials of photoelectromotive elements of solar cells;

diaphragms and sliding members such as various types of packings of diaphragm pumps;

films for agriculture, and weathering covers for various kinds of roof materials, sidewalls and the like;

interior materials used in the building field, and coating materials for glasses such as non-flammable fireproof safety glasses; and

lining materials for laminate steel sheets used in the household electric field.

The fuel transfer members used in fuel systems of automobiles further include fuel hoses, filler hoses and evap hoses. The above fuel transfer members can also be used as fuel transfer members for gasoline additive-containing fuels, resultant to sour gasoline, resultant to alcohols, and resultant to methyl tertiary butyl ether and amines and the like.

The above chemical stoppers and packaging films for chemicals have excellent chemical resistance to acids and the like. The above chemical solution transfer members also include corrosionproof tapes wound on chemical plant pipes.

The above formed articles also include vehicular radiator tanks, chemical solution tanks, bellows, spacers, rollers and gasoline tanks, waste solution transport containers, high-temperature liquid transport containers and fishery and fish farming tanks.

The above formed articles further include members used for vehicular bumpers, door trims and instrument panels, food processing apparatuses, cooking devices, water- and oil-repellent glasses, illumination-related apparatuses, display boards and housings of OA devices, electrically illuminated billboards, displays, liquid crystal displays, cell phones, printed circuit boards, electric and electronic components, sundry goods, dust bins, bathtubs, unit baths, ventilating fans, illumination frames and the like.

Due to that the formed articles containing the copolymer of the present disclosure are excellent in the heat resistance, do not corrode metal molds, can easily be produced by an injection molding method, are very excellent in the water vapor low permeability and excellent in the electrolytic solution low permeability, hardly make an electrolytic solution to leak out, are excellent in the crack resistance to compression stresses, the heat distortion resistance and the abrasion resistance and excellent in the sealability at high temperatures, and hardly make fluorine ions to dissolve out in an electrolytic solution, the formed articles can suitably be utilized as members to be compressed containing the copolymer.

The members to be compressed of the present disclosure, even when being deformed at a high compression deformation rate, exhibit a high surface pressure. The members to be compressed of the present disclosure can be used in a state of being compressed at a compression deformation rate of 10% or higher, and can be used in a state of being compressed at a compression deformation rate of 20% or higher or 25% or higher. By using the members to be compressed of the present disclosure by being deformed at such a high compression deformation rate, a certain rebound resilience can be retained for a long term and the sealing property and the insulating property can be retained for a long term.

The members to be compressed of the present disclosure, even when being deformed at a high temperature and at a high compression deformation rate, exhibit a high storage elastic modulus and a large amount of recovery and a high surface pressure. The members to be compressed of the present disclosure can be used at 150°C or higher and in a state of being compression deformed at a compression deformation rate of 10% or higher, and can be used at 150°C or higher and in a state of being compression deformed at a compression deformation rate of 20% or higher or 25% or higher. By using the members to be compressed of the present disclosure by being deformed at such a high temperature and at such a high compression deformation rate, a certain rebound resilience can be retained also at high temperatures for a long term and the sealing property and the insulating property at high temperatures can be retained for a long term.

In the case where the members to be compressed are used in a state of being compressed, the compression deformation rate is a compression deformation rate of a portion having the highest compression deformation rate. For example, in the case where a flat member to be compressed is used in a state of being compressed in the thickness direction, the compression deformation rate is that in the thickness direction. Further for example, in the case where a member to be compressed is used with only some portions of the member in a state of being compressed, the compression deformation rate is that of a portion having the highest compression deformation rate among compression deformation rates of the compressed portions.

The size and shape of the members to be compressed of the present disclosure may suitably be set according to applications, and are not limited. The shape of the members to be compressed of the present disclosure may be, for example, annular. The members to be compressed of the present disclosure may also have, in plan view, a circular shape, an elliptic shape, a corner-rounded square or the like, and may be a shape having a throughhole in the central portion thereof.

It is preferable that the members to be compressed of the present disclosure are used as members constituting non-aqueous electrolyte batteries. Due to that the members to be compressed of the present disclosure are very excellent in the water vapor low permeability and excellent in the electrolytic solution low permeability, hardly make an electrolytic solution to leak out, are excellent in the crack resistance to compression stresses, the heat distortion resistance and the abrasion resistance and very excellent in the sealability at high temperatures, and hardly make fluorine ions to dissolve out in an electrolytic solution, the members to be compressed are especially suitable as members to be used in a state of contacting with a non-aqueous electrolyte in non-aqueous electrolyte batteries. That is, the members to be compressed of the present disclosure may also be ones having a liquid-contact surface with a non-aqueous electrolyte in the non-aqueous electrolyte batteries.

The members to be compressed of the present disclosure hardly make fluorine ions to dissolve out in non-aqueous electrolytes. Therefore, by using the members to be compressed of the present disclosure, the rise in the fluorine ion concentration in the non-aqueous electrolyte solutions can be suppressed. Consequently, by using the members to be compressed of the present disclosure, the generation of gases such as HF in the non-aqueous electrolyte solutions can be suppressed, and the deterioration and the shortening of the service life of the battery performance of the non-aqueous electrolyte solution batteries can be suppressed.

From the viewpoint that the members to be compressed of the present disclosure can more suppress the generation of gases such as HF in non-aqueous electrolyte solutions, and can more suppress the deterioration and the shortening of the service life of the battery performance of non-aqueous electrolyte solution batteries, the amount of fluorine ions dissolving out to be detected in an electrolytic solution immersion test is, in terms of mass, preferably 1.0 ppm or smaller, more preferably 0.8 ppm or smaller and still more preferably 0.7 ppm or smaller. The electrolytic solution immersion test can be carried out by preparing a test piece having a weight equivalent to 10 sheets of a formed article (15 mm $\times$ 15 mm $\times$ 0.2 mm) using a member to be compressed, and putting a glass-made sample bottle in which the test piece and 2 g of dimethyl carbonate (DMC) have been charged in a constant-temperature vessel at 80°C and allowing the sample bottle to stand for 144 hours.

The members to be compressed of the present disclosure are excellent in the liquid tightness and the electrolytic solution low permeability, and hardly make an electrolytic solution to leak out and permeate. Therefore, by using the members to be compressed of the present disclosure, the battery performance defects and the shortening of the service life of non-aqueous electrolyte batteries can be suppressed.

The electrolytic solution leak amount through the members to be compressed of the present disclosure is, from the viewpoint that the battery performance defects and the shortening of the service life of non-aqueous electrolyte batteries can be suppressed, preferably 0.0030 g/1,000 hr or smaller and more preferably 0.0025 g/1,000 hr or smaller. The electrolytic solution leak amount through the members to be compressed can be measured by a method described in Examples.

The members to be compressed of the present disclosure hardly make water vapor to penetrate. Therefore, by using the members to be compressed of the present disclosure, the permeation of water vapor from the outside to secondary batteries can be suppressed. Consequently, by using the members to be compressed of the present disclosure, the deterioration of the battery performance and the shortening of the service life of non-aqueous electrolyte batteries can be suppressed.

The water vapor permeability of the members to be compressed of the present disclosure is, from the viewpoint that the deterioration of the battery performance and the shortening of the service life of non-aqueous electrolyte batteries can be more suppressed, preferably 8.5 g·cm/m$^2$ or lower, more preferably 8.0 g·cm/m$^2$ or lower, still more preferably 7.9 g·cm/m$^2$ or lower and further still more preferably 7.6 g·cm/m$^2$ or lower. The water vapor permeability of the member to be compressed can be measured under the condition of a temperature of 95°C and for 30 days.

The non-aqueous electrolyte batteries are not limited as long as being batteries having a non-aqueous electrolyte, and examples thereof include lithium ion secondary batteries and lithium ion capacitors. Members constituting the non-aqueous electrolyte batteries include sealing members and insulating members.

For the non-aqueous electrolyte, one or two or more of well-known solvents can be used such as propylene carbonate, ethylene carbonate, butylene carbonate, $\gamma$-butyllactone, 1,2-dimethoxyethane, 1,2-diethoxyethane, dimethyl carbonate, diethyl carbonate and ethyl methyl carbonate. The non-aqueous electrolyte batteries may further have an electrolyte. The electrolyte is not limited, but may be $LiClO_4$, $LiAsF_6$, $LiPF_6$, $LiBF_4$, $LiCl$, $LiBr$, $CH_3SO_3Li$, $CF_3SO_3Li$, cesium carbonate and the like.

The members to be compressed of the present disclosure can suitably be utilized, for example, as sealing members such as sealing gaskets and sealing packings, and insulating members such as insulating gaskets and insulating packings. The sealing members are members to be used for preventing leakage of a liquid or a gas, or penetration of a liquid or a gas from the outside. The insulating members are members to be used for insulating electricity. The members to be compressed of the present disclosure may also be members to be used for the purpose of both of sealing and insulation.

The members to be compressed of the present disclosure, due to being excellent in the heat resistance and the heat distortion resistance and also remarkably excellent in the sealability at high temperatures, can suitably be used under an environment of becoming high temperatures. It is suitable for the members to be compressed of the present disclosure to be used, for example, in an environment where the maximum temperature becomes 40°C or higher. It is suitable for the members to be compressed of the present disclosure to be used, for example, in an environment where the maximum temperature becomes 150°C or higher. Examples of the case where the temperature of the members to be compressed of the present disclosure may become such high temperatures include the case where after a member to be compressed is installed in a state of being compressed to a battery, other battery members are installed to the battery by welding, and the case where a non-aqueous electrolyte battery generates heat.

Due to that the members to be compressed of the present disclosure are very excellent in the water vapor low permeability and excellent in the electrolytic solution low permeability, hardly make an electrolytic solution to leak out, are excellent in the crack resistance to compression stresses, the heat distortion resistance and the abrasion resistance and very excellent in the sealability at high temperatures, and hardly make fluorine ions to dissolve out in an electrolytic solution, the members to be compressed can suitably be used as sealing members for non-aqueous electrolyte batteries or insulating members for non-aqueous electrolyte batteries. For example, in the charge time of batteries such as non-aqueous electrolyte secondary batteries, the temperature of the batteries temporarily becomes 40°C or higher, specially temporarily becomes 150°C or higher in some cases. Even when the members to be compressed of the present disclosure are used by being deformed at high temperatures and at a high compression deformation rate, and moreover are brought into contact with non-aqueous electrolytes at high temperatures, in batteries such as non-aqueous electrolyte batteries, a high rebound resilience is not impaired. Therefore, the members to be compressed of the present disclosure, in the case of being used as sealing members, have the excellent sealing property and also at high temperatures, retain the sealing property for a long term. Further, the members to be compressed of the present disclosure, due to containing the above copolymer, have the excellent insulating property. Therefore, in the case of using the members to be compressed of the present disclosure as insulating members, the member firmly adhere to two or more electrically conductive members and prevent short circuit over a long term.

The copolymer of the present disclosure, due to that the dielectric loss tangent at 6 GHz is low, can suitably be utilized as a material for products for high-frequency signal transmission.

The products for high-frequency signal transmission are not limited as long as being products to be used for transmission of high-frequency signals, and include (1) formed boards such as insulating boards for high-frequency circuits, insulating materials for connection parts and printed circuit boards, (2) formed articles such as bases of high-frequency vacuum tubes and antenna covers, and (3) coated electric wires such as coaxial cables and LAN cables. The products for high-frequency signal transmission can suitably be used in devices utilizing microwaves, particularly microwaves of 3 to 30 GHz, in satellite communication devices, cell phone base stations, and the like.

In the products for high-frequency signal transmission, the copolymer of the present disclosure can suitably be used as an insulator in that the dielectric loss tangent is low.

As the (1) formed boards, printed wiring boards are preferable in that the good electric property is provided. The printed wiring boards are not limited, but examples thereof include printed wiring boards of electronic circuits for cell phones, various computers, communication devices and the like. As the (2) formed articles, antenna covers are preferable in that the dielectric loss is low.

As the (3) coated electric wires, preferable are coated electric wires having a coating layer containing the copolymer of the present disclosure. That is, formed articles containing the copolymer of the present disclosure can suitably be utilized as coating layers containing the copolymer.

A commercially available tetrafluoroethylene/fluoro(alkyl vinyl ether) copolymer is known to have a continuous use-temperature of 260°C. The continuous use-temperature means the highest operating temperature which a polymer can withstand continuously.

In recent years, copolymers have been needed which can be used in a severer working environment, in other words, have a continuous use-temperature exceeding 260°C. In many industrial applications in oil fields and gas fields, there has been arising the necessity of having a melt-fabricable polymer material having a continuous use-temperature exceeding 260°C in order to withstand an extremely high working temperature encountered in construction work and the like. For example, in the case of carrying out deep excavation, the data communication cable may possibly be exposed to a temperature of 280°C or higher in a downhole winze.

The formed articles containing the copolymer of the present disclosure enable having a continuous use-temperature of 280°C. The formed articles containing the copolymer of the present disclosure do not melt even at a very high temperature of 280°C; and the coating layers composed of the formed articles hold the coating without forming rupture and cracking caused by a thermal load, and can be used continuously. Hence, the formed articles containing the copolymer of the present disclosure are suitable to use as the coating layers of the coated electric wires to be used in an environment where the maximum temperature becomes 280°C or higher.

The coated electric wire has a core wire, and the coating layer installed on the periphery of the core wire and containing the copolymer of the present disclosure. For example, an extrusion formed article made by melt extruding the copolymer in the present disclosure on a core wire can be made into the coating layer. The coated electric wires, due to that the coating layer has excellent heat resistance and a low dielectric loss tangent, are suitable to high-frequency transmission cables, flat cables, heat-resistant cables and the like, and particularly to high-frequency transmission cables.

As a material for the core wire, for example, a metal conductor material such as copper or aluminum can be used. The core wire is preferably one having a diameter of 0.02 to 3 mm. The diameter of the core wire is more preferably 0.04 mm or larger, still more preferably 0.05 mm or larger and especially preferably 0.1 mm or larger. The diameter of the core wire is more preferable 2 mm or smaller.

With regard to specific examples of the core wire, there may be used, for example, AWG (American Wire Gauge)-46 (solid copper wire of 40 μm in diameter), AWG-26 (solid copper wire of 404 μm in diameter), AWG-24 (solid copper wire of 510 μm in diameter), and AWG-22 (solid copper wire of 635 μm in diameter).

The coating layer is preferably one having a thickness of 0.1 to 3.0 mm. It is also preferable that the thickness of the coating layer is 2.0 mm or smaller.

The high-frequency transmission cables include coaxial cables. The coaxial cables generally have a structure configured by laminating an inner conductor, an insulating coating layer, an outer conductor layer and a protective coating layer in order from the core part to the peripheral part. A formed article containing the copolymer of the present disclosure can suitably be utilized as the insulating coating layer containing the copolymer. The thickness of each layer in the above structure is not limited, but is usually: the diameter of the inner conductor is approximately 0.1 to 3 mm; the thickness of the insulating coating layer is approximately 0.3 to 3 mm; the thickness of the outer conductor layer is approximately 0.5 to 10 mm; and the thickness of the protective coating layer is approximately 0.5 to 2 mm.

Alternatively, the coating layer may be one containing cells, and is preferably one in which cells are homogeneously distributed.

The average cell size of the cells is not limited, but is, for example, preferably 60 $\mu$m or smaller, more preferably 45 $\mu$m or smaller, still more preferably 35 $\mu$m or smaller, further still more preferably 30 $\mu$m or smaller, especially preferable 25 $\mu$m or smaller and further especially preferably 23 $\mu$m or smaller. Then, the average cell size is preferably 0.1 $\mu$m or larger and more preferably 1 $\mu$m or larger. The average cell size can be determined by taking an electron microscopic image of an electric wire cross section, calculating the diameter of each cell and averaging the diameters.

The foaming ratio of the coating layer may be 20% or higher, and is more preferably 30% or higher, still more preferably 33% or higher and further still more preferably 35% or higher. The upper limit is not limited, but is, for example, 80%. The upper limit of the foaming ratio may be 60%. The foaming ratio is a value determined as ((the specific gravity of an electric wire coating material - the specific gravity of the coating layer)/(the specific gravity of the electric wire coating material) $\times$ 100. The foaming ratio can suitably be regulated according to applications, for example, by regulation of the amount of a gas, described later, to be injected in an extruder, or by selection of the kind of a gas dissolving.

Alternatively, the coated electric wire may have another layer between the core wire and the coating layer, and may further have another layer (outer layer) on the periphery of the coating layer. In the case where the coating layer contains cells, the electric wire of the present disclosure may be of a two-layer structure (skin-foam) in which a non-foaming layer is inserted between the core wire and the coating layer, a two-layer structure (foam-skin) in which a non-foaming layer is coated as the outer layer, or a three-layer structure (skin-foam-skin) in which a non-foaming layer is coated as the outer layer of the skin-foam structure. The non-foaming layer is not limited, and may be a resin layer composed of a resin, such as a TFE/HFP-based copolymer, a TFE/PAVE copolymer, a TFE/ethylene-based copolymer, a vinylidene fluoride-based polymer, a polyolefin resin such as polyethylene [PE], or polyvinyl chloride [PVC].

The coated electric wire can be produced, for example, by using an extruder, heating the copolymer, extruding the copolymer in a melt state on the core wire to thereby form the coating layer.

In formation of a coating layer, by heating the copolymer and introducing a gas in the copolymer in a melt state, the coating layer containing cells can be formed. As the gas, there can be used, for example, a gas such as chlorodifluoromethane, nitrogen or carbon dioxide, or a mixture thereof. The gas may be introduced as a pressurized gas in the heated copolymer, or may be generated by mingling a chemical foaming agent in the copolymer. The gas dissolves in the copolymer in a melt state.

The formed articles containing the copolymer of the present disclosure, due to being excellent in the heat resistance, can suitably be utilized as films containing the copolymer.

The copolymer of tetrafluoroethylene and a fluoro(alkyl vinyl ether), due to being excellent in the chemical resistance and the heat resistance, and being melt-fabricable, is useful as release films and surface materials of rolls used in OA devices. In recent years, such a severe situation has been continuing that in production of thin film products, the high heat resistance withstandable to heat lamination is demanded, and in the OA device field, the colorization and the speed-up advance and also on the surface materials of rolls in fixation units, a higher heat resistance is demanded.

Due to that in the copolymer of the present disclosure containing the TFE unit and the PPVE unit, the content of the PPVE unit and the melt flow rate (MFR) are suitably regulated, films formed from the copolymer have a high heat resistance. In the above-mentioned heat lamination, although it is required that a wide temperature condition from 100 up to nearly 300°C can be withstood, the copolymer of the present disclosure, since having the above constitution, can be used suitably even in a severe temperature situation. Films containing the copolymer of the present disclosure, due to not melting even at as very high a temperature as 280°C, and having a high glass transition temperature, can withstand softening up to nearly 100°C. Therefore, films containing the copolymer of the present disclosure are suitable to use as heat-resultant films to be used in an environment where the maximum temperature becomes 280°C or higher.

The release films can be produced by forming the copolymer of the present disclosure by melt extrusion, calendering, press molding, casting or the like. From the viewpoint that uniform thin films can be obtained, the release films can be produced by melt extrusion.

The copolymer of the present disclosure is formed into needed shapes by extrusion forming, compression molding, press molding or the like to be formed into sheet-shapes, filmy shapes or tubular shapes, and can be used as surface materials for OA device rolls, OA device belts or the like. Thin-wall tubes and films can be produced particularly by a melt extrusion forming method.

So far, embodiments have been described, but it is to be understood that various changes and modifications of patterns and details may be made without departing from the subject matter and the scope of the claims.

EXAMPLES

The embodiments of the present disclosure will be described by Examples as follows, but the present disclosure is not limited only to these Examples.

Each numerical value in Examples and Comparative Examples was measured by the following methods.

(Content of a monomer unit)

The content of each monomer unit was measured by an NMR analyzer (for example, manufactured by Bruker BioSpin GmbH, AVANCE 300, high-temperature probe).

(Melt flow rate (MFR))

The polymer was made to flow out from a nozzle of 2.1 mm in inner diameter and 8 mm in length at 372°C under a load of 5 kg by using a Melt Indexer G-01 (manufactured by Toyo Seiki Seisaku-sho, Ltd.) according to ASTM D1238, and the mass (g/10 min) of the polymer flowing out per 10 min was determined.

(Number of functional groups)

Pellets of the copolymer was molded by cold press into a film of 0.25 to 0.30 mm in thickness. The film was 40 times scanned and analyzed by a Fourier transform infrared spectrometer [FT-IR (Spectrum One, manufactured by PerkinElmer, Inc.)] to obtain an infrared absorption spectrum, and a difference spectrum against a base spectrum that is completely fluorinated and has no functional groups is obtained. From an absorption peak of a specific functional group observed on this difference spectrum, the number N of the functional group per $1 \times 10^6$ carbon atoms in the sample was calculated according to the following formula (A).

$$N = I \times K/t \cdots (A)$$

I: absorbance

K: correction factor

t: thickness of film (mm)

Regarding the functional groups in the present disclosure, for reference, the absorption frequency, the molar absorption coefficient and the correction factor are shown in Table 2. The molar absorption coefficients are those determined from FT-IR measurement data of low molecular model compounds.

[Table 2]

Table 2

| Functional Group | Absorption Frequency (cm$^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF$_2$H | 3020 | 8.8 | 26485 | $H(CF_2CF_2)_3CH_2OH$ |
| -CF=CF$_2$ | 1795 | 635 | 366 | $CF_2=CF_2$ |

(Melting point)

The polymer was heated, as a first temperature raising step at a temperature-increasing rate of 10°C/min from 200°C to 350°C, then cooled at a cooling rate of 10°C/min from 350°C to 200°C, and then again heated, as second temperature raising step, at a temperature-increasing rate of 10°C/min from 200°C to 350°C by using a differential scanning calorimeter (trade name: X-DSC7000, manufactured by Hitachi High-Tech Science Corp.); and the melting point was determined from a melting curve peak observed in the second temperature raising step.

(Glass transition temperature (Tg))

The glass transition temperature (Tg) was determined by carrying out a dynamic viscoelasticity measurement using a dynamic viscoelasticity analyzer DVA-220 (manufactured by IT Keisoku Seigyo K.K.). The measurement was carried out under the condition of a temperature-increasing rate of 2°C/min and a frequency of 10 Hz, and the temperature at the peak of tan$\delta$ was determined as the glass transition temperature.

Example 1

53.8 L of pure water was charged in a 174 L-volume autoclave; nitrogen replacement was sufficiently carried out; thereafter, 41.7 kg of perfluorocyclobutane, 0.44 kg of perfluoro(propyl vinyl ether) (PPVE) and 0.61 kg of methanol were charged; and the temperature in the system was held at 35°C and the stirring speed was held at 200 rpm. Then, tetrafluoroethylene (TFE) was introduced under pressure up to 0.5 MPa, and thereafter 0.224 kg of a 50% methanol solution of di-n-propyl peroxydicarbonate was charged to initiate polymerization. Since the pressure in the system decreased along with the progress of the polymerization, TFE was continuously supplied to make the pressure constant, and 0.022 kg of PPVE was added for every 1 kg of TFE supplied and the polymerization was continued for 7 hours. TFE was released to return the pressure in the autoclave to the atmospheric pressure, and thereafter, an obtained reaction product was washed with water and dried to thereby obtain 30 kg of a powder.

The obtained powder was melt extruded at 360°C by a screw extruder (trade name: PCM46, manufactured by Ikegai Corp.) to thereby obtain pellets of a TFE/PPVE copolymer. The PPVE content of the obtained pellets was measured by the method described above. The result is shown in Table 3.

The obtained pellets were put in a vacuum vibration-type reactor VVD-30 (manufactured by Okawara MFG. Co., Ltd.), and heated to 210°C. After vacuumizing, $F_2$ gas diluted to 20% by volume with $N_2$ gas was introduced to the atmospheric pressure. 0.5 hour after the $F_2$ gas introduction, vacuumizing was once carried out and $F_2$ gas was again introduced. Further, 0.5 hour thereafter, vacuumizing was again carried out and $F_2$ gas was again introduced. Thereafter, while the above operation of the $F_2$ gas introduction and the vacuumizing was carried out once every 1 hour, the reaction was carried out at a temperature of 210°C for 10 hours. After the reaction was finished, the reactor interior was replaced sufficiently by $N_2$ gas to finish the fluorination reaction. By using the fluorinated pellets, the above physical properties were measured by the methods described above. The results are shown in Table 3.

Example 2

Fluorinated pellets were obtained as in Example 1, except for changing the charged amount of PPVE to 0.49 kg, changing the charged amount of methanol to 0.96 kg and changing the additionally charged amount of PPVE for every 1 kg of TFE supplied to 0.025 kg. The results are shown in Table 3.

Example 3

Fluorinated pellets were obtained as in Example 1, except for changing the charged amount of PPVE to 0.53 kg, changing the charged amount of methanol to 0.42 kg, adding 0.027 kg of PPVE for every 1 kg of TFE supplied, and changing the polymerization time to 7.5 hours. The results are shown in Table 3.

Example 4

Fluorinated pellets were obtained as in Example 1, except for changing the charged amount of PPVE to 0.53 kg, changing the charged amount of methanol to 1.04 kg, adding 0.027 kg of PPVE for every 1 kg of TFE supplied, changing the polymerization time to 7.5 hours, changing the raised temperature of the vacuum vibration-type reactor to 180°C, and changing the reaction condition to at 180°C and for 10 hours. The results are shown in Table 3.

Example 5

Fluorinated pellets were obtained as in Example 1, except for changing the charged amount of PPVE to 0.53 kg, changing the charged amount of methanol to 1.29 kg, adding 0.027 kg of PPVE for every 1 kg of TFE supplied, changing the polymerization time to 7.5 hours, changing the raised temperature of the vacuum vibration-type reactor to 180°C, and changing the reaction condition to at 180°C and for 10 hours. The results are shown in Table 3.

Example 6

Fluorinated pellets were obtained as in Example 1, except for changing the charged amount of PPVE to 0.55 kg, changing the charged amount of methanol to 0.71 kg, adding 0.028 kg of PPVE for every 1 kg of TFE supplied, changing the polymerization time to 7.5 hours. The results are shown in Table 3.

Example 7

Fluorinated pellets were obtained as in Example 1, except for changing the charged amount of PPVE to 0.55 kg, changing the charged amount of methanol to 1.16 kg, adding 0.028 kg of PPVE for every 1 kg of TFE supplied, and changing the polymerization time to 7.5 hours. The results are shown in Table 3.

Example 8

Fluorinated pellets were obtained as in Example 1, except for changing the charged amount of PPVE to 0.57 kg, changing the charged amount of methanol to 0.77 kg, adding 0.029 kg of PPVE for every 1 kg of TFE supplied, and changing the polymerization time to 7.5 hours. The results are shown in Table 3.

Example 9

Fluorinated pellets were obtained as in Example 1, except for changing the charged amount of PPVE to 0.53 kg, changing the charged amount of methanol to 1.55 kg, changing the charged amount of the 50% methanol solution of di-n-propyl peroxydicarbonate to 0.112 kg, adding 0.027 kg of PPVE for every 1 kg of TFE supplied, and changing the polymerization time to 10 hours. The results are shown in Table 3.

Example 10

Fluorinated pellets were obtained as in Example 1, except for changing the charged amount of PPVE to 0.51 kg, changing the charged amount of methanol to 1.38 kg, changing the charged amount of the 50% methanol solution of di-n-propyl peroxydicarbonate to 0.112 kg, adding 0.026 kg of PPVE for every 1 kg of TFE supplied, and changing the polymerization time to 10 hours. The results are shown in Table 3.

Example 11

Fluorinated pellets were obtained as in Example 1, except for changing the charged amount of PPVE to 0.46 kg, adding 1.21 kg of methanol, changing the charged amount of the 50% methanol solution of di-n-propyl peroxydicarbonate to 0.112 kg, adding 0.024 kg of PPVE for every 1 kg of TFE supplied, and changing the polymerization time to 9 hours. The results are shown in Table 3.

Comparative Example 1

Fluorinated pellets were obtained as in Example 1, except for changing the charged amount of pure water to 26.6 L, perfluorocyclobutane to 30.4 kg, PPVE to 0.77 kg and methanol to 3.30 kg, introducing TFE under pressure up to 0.58 MPa, charging 0.011 kg of the 50% methanol solution of di-n-propyl peroxydicarbonate, adding 0.031 kg of PPVE for every 1 kg of TFE supplied, and changing the polymerization time to 10 hours to thereby obtain 15 kg of a powder. The results are shown in Table 3.

Comparative Example 2

Pellets (non-fluorinated pellets) were obtained as in Example 1, except for changing the charged amount of PPVE to 0.25 kg, changing the charged amount of methanol to 2.49 kg, changing the charged amount of the 50% methanol solution of di-n-propyl peroxydicarbonate to 0.149 kg, and changing the additionally charged amount of PPVE for every 1 kg of TFE supplied to 0.013 kg. The results are shown in Table 3.

Comparative Example 3

Pellets (non-fluorinated pellets) were obtained as in Example 1, except for changing the charged amount of PPVE to 0.53 kg, changing the charged amount of methanol to 0.63 kg, adding 0.027 kg of PPVE for every 1 kg of TFE supplied, and changing the polymerization time to 7.5 hours. The results are shown in Table 3.

Comparative Example 4

Fluorinated pellets were obtained as in Example 1, except for changing the charged amount of PPVE to 0.46 kg, adding no methanol, changing the charged amount of the 50% methanol solution of di-n-propyl peroxydicarbonate to 0.104 kg, adding 0.024 kg of PPVE for every 1 kg of TFE supplied, and changing the polymerization time to 8 hours. The results are shown in Table 3.

Comparative Example 5

Fluorinated pellets were obtained as in Example 1, except for changing the charged amount of PPVE to 0.53 kg, changing the charged amount of methanol to 1.83 kg, charging 0.224 kg of the 50% methanol solution of di-n-propyl peroxydicarbonate, adding 0.027 kg of PPVE for every 1 kg of TFE supplied, and changing the polymerization time to 8 hours. The results are shown in Table 3.

[Table 3]

**Table 3**

| | PPVE content (mass%) | MFR (g/10 min) | Number of functional groups (number/$C10^6$) | Melting point (°C) | Tg (°C) |
|---|---|---|---|---|---|
| Example 1 | 2.2 | 11.0 | < 6 | 313 | 101.0 |
| Example 2 | 2.4 | 15.0 | < 6 | 311 | 100.0 |
| Example 3 | 2.6 | 100 | < 6 | 310 | 99.5 |
| Example 4 | 2.6 | 17.0 | 20 | 310 | 99.5 |
| Example 5 | 2.6 | 21.0 | 11 | 310 | 99.5 |
| Example 6 | 2.7 | 13.0 | < 6 | 310 | 99.5 |
| Example 7 | 2.7 | 19.0 | < 6 | 310 | 99.5 |
| Example 8 | 2.8 | 14.0 | < 6 | 310 | 99.0 |
| Example 3 | 2.6 | 8.5 | < 6 | 310 | 99.5 |
| Example 10 | 2.5 | 7.0 | < 6 | 311 | 100.0 |
| Example 11 | 2.3 | 5.6 | < 6 | 312 | 1 00.5 |
| Comparative Example 1 | 3.0 | 17.2 | < 6 | 310 | 98.5 |
| Comparative Example 2 | 1.3 | 19.0 | 261 | 319 | 103.5 |
| Comparative Example 3 | 2.6 | 10.8 | 211 | 310 | 99.5 |
| Comparative Example 4 | 2.3 | 1.8 | < 6 | 312 | 100.5 |
| Comparative Example 5 | 2.6 | 33.0 | < 6 | 310 | 99.5 |

The description of "<6" in Table 3 means that the number of functional groups is less than 6.

Then, by using the obtained pellets, the following properties were evaluated. The results are shown in Table 4.

(Water vapor permeability)

By using the pellets and a heat press molding machine, a sheet-shape test piece of approximately 0.2 mm in thickness was prepared. 18 g of water was put in a test cup (permeation area: 12.56 cm$^2$), and the test cup was covered with the sheet-shape test piece; and a PTFE gasket was pinched and fastened to hermetically close the test cup. The sheet-shape test piece was brought into contact with the water, and held at a temperature of 95°C for 30 days, and thereafter, the test cup was taken out and allowed to stand at room temperature for 2 hours; thereafter, the amount of the mass lost was measured. The water vapor permeability (g·cm/m$^2$) was determined by the following formula. In Table 4, the description of "crack" means that a test piece was inferior in the crack resistance to a compression stress and a crack(s) was generated in the test piece during the test.

$$\text{Water vapor permeability (g·cm/m}^2) = \text{the amount of the mass}$$
$$\text{lost (g)} \times \text{the thickness of the sheet-shape test piece (cm) / the}$$
$$\text{permeation area (m}^2)$$

(Electrolytic solution leak test)

The copolymer was injection molded by using an injection molding machine (SE50EV-A, manufactured by Sumitomo Heavy Industries, Ltd.) set at a cylinder temperature of 350 to 385°C and a metal mold temperature of 150 to 200°C, to thereby obtain a gasket of $\phi$17.7 mm in outer diameter, $\phi$14.3 mm in inner diameter and 1.6 mmt in thickness.

As illustrated in Figure 1, 2 g of an electrolytic solution 2 was charged in an aluminum alloy-made cup 1. The electrolytic solution contained ethylene carbonate (EC) and diethyl carbonate (DEC) wherein the volume ratio (EC/DEC) of EC and DEC was 30/70 (% by volume). The gasket 7 was assembled between the cup 1 and a gasket compression jig 3 and the gasket 7 was compressed by fastening a lid 4 with bolts 5. A spacer 6 was installed between the lid 4 and the cup 1 to regulate the compression deformation rate of the gasket 7 to 50%. The mass of a test jig 10 thus obtained was measured. The test jig 10 was charged in a constant-temperature vessel heated at 60°C, and after being allowed to stand for 1,000 hours, was taken out, and after the test jig 10 was allowed to stand at room temperature for 2 hours, the mass thereof was measured. The electrolytic solution leak amount was determined by the following formula. This operation was repeated 5 times, and the average value of the electrolytic solution leak amounts was determined. In Table 4, the average value is indicated.

$$\text{Electrolytic solution leak amount (g/1,000 h)} = \text{(the mass of}$$
$$\text{the test jig before the heating)} - \text{(the mass of the test jig after}$$
$$\text{the heating)}$$

(Amount of recovery)

Approximately 2 g of the pellets was charged in a metal mold (inner diameter: 13 mm, height: 38 mm), and in that state, melted by hot plate press at 370°C for 30 min, thereafter, water-cooled under a pressure of 0.2 MPa (resin pressure) to thereby prepare a molded article of approximately 8 mm in height. Thereafter, the obtained molded article was cut to prepare a test piece of 13 mm in outer diameter and 6 mm in height.

The prepared test piece was compressed to a compression deformation rate of 50% (that is, the test piece of 6 mm in height was compressed to a height of 3 mm) at a normal temperature by using a compression device. The compressed test piece fixed on the compression device was allowed to stand still in an electric furnace at 150°C for 18 hours. The compression device was taken out from the electric furnace, and cooled to room temperature; thereafter, the test piece was dismounted. The collected test piece was allowed to stand at room temperature for 30 min, and the height of the collected test piece was measured and the amount of recovery was determined by the following formula.

$$\text{Amount of recovery (mm)} = t_2 - t_1$$

$t_1$: the height of a spacer (mm)
$t_2$: the height of the test piece dismounted from the compression device (mm)

In the above test, $t_1$ was 3 mm. In Table 4, the description of "crack" means that a test piece was inferior in the crack resistance to a compression stress and a crack(s) was generated in the test piece during the test.

(Storage elastic modulus (E'))

The storage elastic modulus was determined by carrying out a dynamic viscoelasticity measurement using a DVA-220 (manufactured by IT Keisoku Seigyo K.K.). By using, as a sample test piece, a heat press molded sheet of 25 mm in length, 5 mm in width and 0.2 mm in thickness, the measurement was carried out under the condition of a temperature-increasing rate of 2°C/min, and a frequency of 10 Hz, and in the range of 30°C to 250°C, and the storage elastic modulus (MPa) at 150°C was identified.

(Surface pressure at 150°C)

The 150°C surface pressure was determined by the following formula from the result of the compression test at 150°C and the result of the storage elastic modulus measurement at 150°C.

$$\text{Surface pressure at } 150°C \text{ (MPa)}: (t_2 - t_1)/t_1 \times E'$$

$t_1$: the height of a spacer (mm)
$t_2$: the height of the test piece dismounted from the compression device (mm)
E': the storage elastic modulus at 150°C (MPa)

(Electrolytic solution immersion test)

Approximately 5 g of the pellets was charged in a metal mold (inner diameter: 120 mm, height: 38 mm), and melted by hot plate press at 370°C for 20 min, thereafter, water-cooled with a pressure of 1 MPa (resin pressure) to thereby prepare a molded article of approximately 0.2 mm in thickness. Thereafter, by using the obtained molded article, test pieces of 15-mm square were prepared.

10 sheets of the obtained test pieces and 2 g of an electrolytic solution (dimethyl carbonate (DMC)) were put in a 20-mL glass sample bottle, and the cap of the sample bottle was closed. The sample bottle was put in a thermostatic chamber at 80°C, and allowed to stand for 144 hours to thereby immerse the test pieces in the electrolytic solution. Thereafter, the sample bottle was taken out from the thermostatic chamber, and cooled to room temperature; then, the test pieces were taken out from the sample bottle. The electrolytic solution remaining after the test pieces were taken out was allowed to be air-dried in the sample bottle put in a room controlled to be a temperature of 25°C for 24 hours; and 2 g of ultrapure water was added. The obtained aqueous solution was transferred to a measuring cell of an ion chromatosystem; and the amount of fluorine ions in the aqueous solution was measured by an ion chromatograph system (manufactured by Thermo Fisher Scientific Inc., Dionex ICS-2100).

(Metal mold corrosion test)

20 g of the pellets was put in a glass container (50-ml screw vial); and a metal post (5-mm square shape, length of 30 mm) formed of HPM38 (Cr-plated) or HPM38 (Ni-plated) was hung in the glass container so as not to be in contact with the pellets. Then, the glass container was covered with a lid made of an aluminum foil. The glass container was put in an oven as is and heated at 380°C for 3 hours. Thereafter, the heated glass container was taken out from the oven, and cooled to room temperature; and the degree of corrosion of the surface of the metal post was visually observed. The degree of corrosion was judged based on the following criteria.

Good: no corrosion observed.
Fair: corrosion slightly observed
Poor: corrosion observed.

(Dielectric loss tangent)

By melt forming the pellets, a cylindrical test piece of 2 mm in diameter was prepared. The prepared test piece was set in a cavity resonator for 6 GHz, manufactured by KANTO Electronic Application and Development Inc., and the dielectric loss tangent was measured by a network analyzer, manufactured by Agilent Technologies Inc. By analyzing the measurement result by analysis software "CPMA", manufactured by KANTO Electronic Application and Development Inc., on PC connected to the network analyzer, the dielectric loss tangent (tan6) at 20°C at 6 GHz was determined.

(Electric wire coating property)

By using the pellets obtained in each Example, extrusion coating in the coating thickness described below was carried out on a copper conductor of 0.812 mm in conductor diameter by a 30-mmφ electric wire coating extruder (manufactured by TANABE PLASTICS MACHINERY CO., LTD.), to thereby obtain a coated electric wire. The electric wire coating extrusion conditions were as follows.

    a) Core conductor: mild steel wire conductor diameter: 0.812 mm (AWG20)
    b) Coating thickness: 0.9 mm
    c) Coated electric wire diameter: 2.6 mm
    d) Electric wire take-over speed: 7 m/min
    e) Extrusion condition:

```
· Cylinder screw diameter = 30 mm, a single-screw extruder of L/D
= 22
```

    · Die (inner diameter)/tip (outer diameter) = 26.0 mm/8.0 mm Set temperature of the extruder: barrel section C-1 (330°C), barrel section C-2 (350°C), barrel section C-3 (370°C), head section H (380°C), die section D-1 (380°C), die section D-2 (380°C), Set temperature for preheating core wire: 80°C

The obtained coated electric wire was cut out into a length of 20 cm, and 10 pieces thereof were bundled and wrapped in an aluminum foil, and allowed to stand in an oven at 280°C for 24 hours. After the heat treatment, the bundled pieces was taken out of the aluminum foil, and observed to verify that the coating layer was held without being fused, melted or ruptured. The verification is indicated as Good in Table.

(Film heat resistance)

By using the pellets obtained in each Example, a film was prepared by a φ14-mm extruder (manufactured by Imoto machinery Co., LTD) using a T die. The extrusion conditions were as follows.

    a) Take-up speed: 1 m/min
    b) Roll temperature: 120°C
    c) Film width: 70 mm
    d) Thickness: 0.10 mm
    e) Extrusion condition:

```
· Cylinder screw diameter = 14 mm, a single-screw extruder of L/D
= 20
```

Set temperature of the extruder: barrel section C-1 (330°C), barrel section C-2 (350°C), barrel section C-3 (370°C), T die section (380°C)
The obtained film was cut out into a length of 10 cm and 10 sheets thereof were piled and wrapped in an aluminum foil and allowed to stand in an oven at 280°C for 24 hours. After the heat treatment, the piled film was taken out of the aluminum foil, and observed to verify that the film did not fuse. The no fusion is indicated as Good in Table.

(Abrasion test)

By using the pellets and a heat press molding machine, a sheet-shape test piece of approximately 0.2 mm in thickness was prepared and cut out into a test piece of 10 cm × 10 cm. The prepared test piece was fixed on a test bench of a Taber abrasion tester (No. 101 Taber type abrasion tester with an option, manufactured by YASUDA SEIKI SEISAKUSHO, LTD.) and the abrasion test was carried out under the conditions of at a load of 500 g, using an abrasion wheel CS-10 (rotationally polished in 20 rotations with an abrasive paper #240) and at a rotation rate of 60 rpm by using the Taber abrasion tester. The weight of the test piece after 1,000 rotations was measured, and the same test piece was further subjected to the test of 10,000 rotations and thereafter, the weight thereof was measured. The abrasion loss was determined by the following formula.

$$\text{Abrasion loss (mg)} = M1 - M2$$

M1: the weight of the test piece after the 1,000 rotations (mg)
M2: the weight of the test piece after the 10,000 rotations (mg)

(Electrolytic solution permeability)

By using the pellets and a heat press molding machine, a sheet-shape test piece of approximately 0.2 mm in thickness was prepared. 10 g of dimethyl carbonate (DMC) was put in a test cup (permeation area: 12.56 $cm^2$), and the test cup was covered with the sheet-shape test piece; and a PTFE gasket was pinched and fastened to hermetically close the test cup. The sheet-shape test piece was brought into contact with the DMC, and held at a temperature of 60°C for 30 days, and thereafter, the test cup was taken out and allowed to stand at room temperature for 1 hour; thereafter, the amount of the mass lost was measured. The DMC permeability (g·cm/m$^2$) was determined by the following formula.

$$\text{Electrolytic solution permeability (g·cm/m}^2) = \text{the amount of}$$
$$\text{the mass lost (g)} \times \text{the thickness of the sheet-shape test piece}$$
$$\text{(cm) / the permeation area (m}^2)$$

In Table 4, the description of "crack" means that a test piece was inferior in the crack resistance to a compression stress and a crack(s) was generated in the test piece during the test.

(Injection moldability)

The copolymer was injection molded by using an injection molding machine (SE50EV-A, manufactured by Sumitomo Heavy Industries, Ltd.) set at a cylinder temperature of 395°C, a metal mold temperature of 220°C and an injection speed of 3 mm/s. The metal mold used was a metal mold (100 mm × 100 mm × 3 mmt, film gate, flow length from the gate: 100 mm) Cr plated on HPM38.
The obtained injection molded article was observed and evaluated according to the following criteria. The presence/absence of white turbidness was visually checked. The presence/absence of roughness of the surface was checked by touching the surface of the injection molded article.
3: The whole of the injection molded article was transparent and the whole surface was smooth.
2: White turbidness was observed within the region of 1 cm from the portion where the gate of the metal mold had been positioned, and the whole surface was smooth.
1: White turbidness was observed within the region of 1 cm from the portion where the gate of the metal mold had been positioned, and roughness was observed on the surface within the region of 1 cm of the portion where the gate of the metal mold had been positioned.
0: The copolymer was not filled in the whole of the metal mold and the molded article having a desired shape was not obtained.

(Bending crack test (heat distortion resistance)

A sheet of approximately 2 mm in thickness was prepared by using the pellets and a heat press molding machine. The obtained sheet was punched out by using a rectangular dumbbell of 13.5 mm × 38 mm to obtain three test pieces. A notch was formed on the middle of a long side of the each obtained test piece according to ASTM D1693 by a blade of 19 mm × 0.45 mm. The three notched test pieces were mounted on a stress crack test jig according to ASTM D1693, and heated in an electric furnace at 80°C for 2 hours; thereafter, the notches and their vicinities were visually observed and the number of cracks was counted. A sheet having no crack generated is excellent in the heat distortion resistance.

Good: the number of cracks was 0
Poor: the number of cracks was 1 or more

[Table 4]

Table 4

| | Water vapor permeability (g·cm/m²) | Electrolytic solution leak amount (g/1000hrs) | Amount of recovery (mm) | 150°C storage elastic modulus (MPa) | 150°C surface pressure (MPa) | Electrolytic solution immersion test — Amount of fluorine ions dissolving out (ppm by mass) | Metal mold corrosion test | | Dielectric loss tangent | Electric wire coating property | Film heat resistance | Abrasion loss (mg) | Electrolytic solution permeability (g·cm/m²) | Injection moldability | Heat distortion resistance 80°C |
|---|---|---|---|---|---|---|---|---|---|---|---|---|---|---|---|
| | | | | | | | HPM38 (Cr plated) | HPM38 (Ni plated) | | | | | | | |
| Example 1 | 7.3 | 0.0028 | 0.042 | 150 | 2.10 | 0.6 | good | good | 0.00034 | good | good | 21.3 | 6.4 | 3 | good |
| Example 2 | 7.3 | 0.0029 | 0.038 | 153 | 1.94 | 0.6 | good | good | 0.00033 | good | good | 24.6 | 6.2 | 3 | good |
| Example 3 | 8.1 | 0.0028 | 0.039 | 145 | 1.89 | 0.6 | good | good | 0.00035 | good | good | 19.9 | 6.6 | 3 | good |
| Example 4 | 7.4 | 0.0030 | 0.036 | 152 | 1.82 | 0.6 | good | good | 0.00038 | good | good | 25.3 | 6.2 | 3 | good |
| Example 5 | 7.0 | 0.0030 | 0.034 | 153 | 1.73 | 0.6 | good | good | 0.00036 | good | good | 27.2 | 6.0 | 3 | good |
| Example 6 | 7.9 | 0.0029 | 0.038 | 148 | 1.87 | 0.6 | good | good | 0.00034 | good | good | 22.0 | 6.4 | 3 | good |
| Example 7 | 7.2 | 0.0030 | 0.035 | 151 | 1.76 | 0.6 | good | good | 0.00033 | good | good | 25.9 | 6.1 | 3 | good |
| Example 8 | 7.9 | 0.0029 | 0.036 | 144 | 1.73 | 0.6 | good | good | 0.00033 | good | good | 22.7 | 6.4 | 3 | good |
| Example 9 | 8.4 | 0.0025 | 0.040 | 144 | 1.92 | 0.6 | good | good | 0.00035 | good | good | 18.4 | 6.8 | 3 | good |
| Example 10 | 8.4 | 0.0025 | 0.042 | 143 | 2.00 | 0.6 | good | good | 0.00035 | good | good | 17.2 | 6.9 | 2 | good |
| Example 11 | 8.2 | 0.0025 | 0.043 | 143 | 2.05 | 0.6 | good | good | 0.00035 | good | good | 16.2 | 7.0 | 1 | good |
| Comparative Example 1 | 7.9 | 0.0035 | 0.032 | 135 | 1.44 | 0.6 | good | good | 0.00034 | — | — | 24.3 | 6.3 | 3 | good |
| Comparative Example 2 | crack | discontinued | crack | — | — | 1.6 | poor | poor | 0.00092 | — | — | 29.6 | crack | — | poor |
| Comparative Example 3 | 8.0 | 0.0037 | 0.037 | 147 | 1.81 | 1.5 | poor | poor | 0.00084 | — | — | 20.4 | 7.6 | 3 | good |
| Comparative Example 4 | 9.5 | 0.0024 | 0.046 | 135 | 2.07 | 0.6 | good | good | 0.00036 | — | — | 11.8 | 8.0 | 0 | good |
| Comparative Example 5 | 6.4 | 0.0035 | 0.027 | 159 | 1.43 | 0.6 | good | good | 0.00032 | — | — | 33.8 | 5.6 | 3 | poor |

REFERENCE SIGNS LIST

10    TEST JIG
1     CUP
2     ELECTROLYTIC SOLUTION
3     GASKET COMPRESSION JIG
4     LID
5     BOLT
6     SPACER
7     GASKET

**Claims**

1. A copolymer, comprising tetrafluoroethylene unit and a perfluoro(propyl vinyl ether) unit, wherein the copolymer has a content of the perfluoro(propyl vinyl ether) unit of 2.0 to 2.8% by mass with respect to the whole of the monomer units, a melt flow rate at 372°C of 5 to 23 g/10 min, and the number of functional groups of 50 or less per $10^6$ main-chain carbon atoms.

2. An injection molded article, comprising the copolymer according to claim 1.

3. A member to be compressed, comprising the copolymer according to claim 1.

4. An extrusion formed article, comprising the copolymer according to claim 1.

5. A coated electric wire, comprising a coating layer comprising the copolymer according to claim 1.

6. A film, comprising the copolymer according to claim 1.

Figure 1

## INTERNATIONAL SEARCH REPORT

| International application No. |
| --- |
| **PCT/JP2021/036301** |

| **A.** | **CLASSIFICATION OF SUBJECT MATTER** |
| --- | --- |

*C08F 8/00*(2006.01)i; *C08F 214/26*(2006.01)i; *C08F 216/14*(2006.01)i; *H01B 7/02*(2006.01)i
FI:    C08F8/00; C08F216/14; H01B7/02 Z; C08F214/26

According to International Patent Classification (IPC) or to both national classification and IPC

| **B.** | **FIELDS SEARCHED** |
| --- | --- |

Minimum documentation searched (classification system followed by classification symbols)

C08F, C08L27

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| Y | JP 48-20788 B1 (E.I. DU PONT DE NEMOURS & CO.) 23 June 1973 (1973-06-23) <br> page 2, examples | 1-6 |
| Y | JP 10-292054 A (E. I. DU PONT DE NEMOURS AND COMPANY) 04 November 1998 (1998-11-04) <br> claims, paragraph [0003], example 5 | 1-6 |
| Y | JP 3-247609 A (E.I. DU PONT DE NEMOURS & CO.) 05 November 1991 (1991-11-05) <br> claims, examples | 1-6 |
| Y | WO 2010/113864 A1 (DAIKIN INDUSTRIES, LTD.) 07 October 2010 (2010-10-07) <br> claims, examples | 1-6 |
| X | WO 2008/047759 A1 (DAIKIN INDUSTRIES, LTD.) 24 April 2008 (2008-04-24) <br> claims, paragraph [0034], example 1 | 1-5 |
| X | WO 2019/003265 A1 (DU PONT MITSUI FLUOROCHEM CO., LTD.) 03 January 2019 (2019-01-03) <br> claims, paragraphs [0031], [0032], examples | 1-6 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **24 November 2021** | **21 December 2021** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**

| International application No. |
| --- |
| **PCT/JP2021/036301** |

| C. | DOCUMENTS CONSIDERED TO BE RELEVANT | |
| --- | --- | --- |
| Category* | Citation of document, with indication, where appropriate, of the relevant passages | Relevant to claim No. |
| X | JP 2017-197690 A (DAIKIN INDUSTRIES, LTD.) 02 November 2017 (2017-11-02)<br>claims, paragraphs [0055], [0063], examples | 1-6 |
| Y | JP 2013-177574 A (DAIKIN INDUSTRIES, LTD.) 09 September 2013 (2013-09-09)<br>claims, paragraph [0040], synthesis example 1, examples | 1-6 |
| Y | WO 2008/032613 A1 (ASAHI GLASS CO., LTD.) 20 March 2008 (2008-03-20)<br>claims, paragraphs [0024], [0038], examples 16, 17 | 1-6 |
| Y | JP 2005-523979 A (E. I. DU PONT DE NEMOURS AND COMPANY) 11 August 2005<br>(2005-08-11)<br>claims, paragraph [0016], example 24 | 1-6 |

Form PCT/ISA/210 (second sheet) (January 2015)

## INTERNATIONAL SEARCH REPORT
### Information on patent family members

International application No.

**PCT/JP2021/036301**

| Patent document cited in search report | | | Publication date (day/month/year) | Patent family member(s) | Publication date (day/month/year) |
|---|---|---|---|---|---|
| JP | 48-20788 | B1 | 23 June 1973 | US 3635926 A column 2, line 40 to column 3, line 19, examples GB 1311370 A | |
| JP | 10-292054 | A | 04 November 1998 | US 6689833 B1 claims, column 1, lines 15-35, example 5 EP 870792 A1 CN 1199062 A | |
| JP | 3-247609 | A | 05 November 1991 | US 4743658 A claims, examples EP 220910 A2 | |
| WO | 2010/113864 | A1 | 07 October 2010 | US 2012/0035329 A1 claims, examples EP 2418227 A1 CN 102365299 A | |
| WO | 2008/047759 | A1 | 24 April 2008 | US 2010/0212929 A1 claims, paragraph [0046], example 1 | |
| WO | 2019/003265 | A1 | 03 January 2019 | US 2020/0114563 A1 claims, paragraphs [0043], [0044], examples EP 3647344 A1 KR 10-2020-0023400 A CN 111032746 A | |
| JP | 2017-197690 | A | 02 November 2017 | (Family: none) | |
| JP | 2013-177574 | A | 09 September 2013 | CN 103946250 A KR 10-2014-0117544 A | |
| WO | 2008/032613 | A1 | 20 March 2008 | US 2009/0176952 A1 claims, paragraphs [0049]-[0052], [0083], examples 16, 17 EP 2058341 A1 CN 101511887 A | |
| JP | 2005-523979 | A | 11 August 2005 | US 2003/0216531 A1 claims, paragraph [0015], example 24 WO 2003/093333 A1 EP 1790671 A1 CN 1649916 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013177574 A